# EUROPEAN PATENT SPECIFICATION

(11) **EP 4 124 416 B1**
(45) Date of publication and mention of the grant of the patent: **13.11.2024**
(21) Application number: 22187604.8
(22) Date of filing: 28.07.2022
(51) Int. Cl.: B25J 5/00, B25J 9/00, B25J 11/00, B25J 13/00, G06F 3/01, G06T 7/11

(54) **TELEPRESENCE ROBOT**
TELEPRÄSENZROBOTER
ROBOT DE TÉLÉPRÉSENCE

(30) Priority: 31.07.2021 US 202117390887
(43) Date of publication of application: 01.02.2023
(73) Proprietor: Sony Interactive Entertainment Inc., Tokyo 108-0075 (JP); Sony Interactive Entertainment LLC, San Mateo, CA 94404 (US); Sony Corporation, 108-0075 Tokyo (JP)
(72) Inventor: OGISHITA, Naoki, San Mateo, 94404 (US); TSUKAHARA, Tsubasa, San Mateo, 94404 (US); IIDA, Fumihiko, San Mateo, 94404 (US); SUZUKI, Ryuichi, San Mateo, 94404 (US); MURATA, Karen, San Mateo, 94404 (US); MOMOSE, Jun, San Mateo, 94404 (US); IMAMURA, Kotaro, San Mateo, 94404 (US); OKUMURA, Yasushi, San Mateo, 94404 (US); BHAT, Ramanath, San Mateo, 94404 (US); KAWAMURA, Daisuke, San Mateo, 94404 (US)
(74) Representative: D Young & Co LLP

(56) References cited:
- US-A1- 2012 239 196
- US-A1- 2018 137 678
- US-A1- 2019 285 881
- US-A1- 2019 366 558
- US-A1- 2020 130 194
- US-B2- 11 065 769

## Description

### FIELD

The application pertains to robots.

### BACKGROUND

Robots are increasingly used not only for performing useful tasks, but also for providing a measure of companionship.

Previously proposed arrangements are disclosed in US 2020/130194 A1 , comprising a communication robot and a control program of a communication robot, and US 11065769 B2, comprising a robot capable of providing a video call service, an operation method thereof, and a server connected thereto.

### SUMMARY

The invention relates to a device that includes at least one computer storage that is not a transitory signal and that in turn includes instructions executable by at least one processor to, for at least a first user, render, from at least one image of the first user by at least one imager, a full-face image representing the first user with background and body parts of the first user cropped out of the image representing the first user. The instructions may be executable to provide, to at least a first robot remote from the first user, the full-face image for presentation thereof on a display of the first robot with the full-face image filling the display. The instructions may be further executable to provide, to the first robot, information from the imager regarding motion of the first user such that a head of the first robot turns to mimic the motion of the first user while continuing to present a full-face image representing the first user on the display of the first robot regardless of whether the head of the first user turned away from the imager.

In another aspect, a method includes, for at least a first user, rendering, from at least one image captured of the first user, a full-face image representing the first user with background and body parts of the first user cropped out of the image captured of the first user. The method includes presenting, on at least one display of a first robot remote from the first user, the full-face image representing the first user with the full-face image filling the display of the first robot. The method also includes turning a head of the first robot to mimic a head turn of the first user while continuing to present a full-face image representing the first user on the display of the first robot.

Additionally, for at least a second user local to the first robot the method includes rendering, from at least one image captured of the second user, a full-face image representing the second user with background and body parts of the second user cropped out of the image representing the second user. The method includes presenting, on at least one display of a second robot local to the first user, the full-face image representing the second user with the full-face image of the second user filling the display of the second robot. Further, the method includes turning a head of the second robot to mimic a head turn of the second user while continuing to present a full-face image representing the second user on the display of the second robot.

In an embodiment, a robot includes a lower body portion on propulsion elements. An upper body portion is coupled to the lower body portion and is movable relative to the lower body portion. The upper body portion includes at least one display configured to present an image representing a person remote from the robot, with the image being a full-face image. An avatar may be presented, or an actual image of the person may be presented.

In some examples the upper body portion is movable relative to the lower body portion in accordance with motion of the person as indicated by signals received from an imager. The imager can be a webcam, smart phone cam, or other imaging device.

The full-face image can be generated from a profile image of the person, if desired using a machine learning (MI,) model executed by a processor in the robot and/or by a processor distanced from the robot.

In some examples, opposed side surfaces of the upper body portion include respective microphones.

Example implementations of the robot can include left and right cameras and at least one processor to send images from the cameras to a companion robot local to and associated with the person. A motorized vehicle may be provided with a recess configured to closely hold the lower body portion to transport the robot. At least one magnet can be disposed in the recess to magnetically couple the robot with the motorized vehicle and to charge at least one battery in the robot. If desired, at least one speaker can be provided on the robot and may be configured to play voice signals received from the person. The top surface of the robot may be implemented by at least one touch sensor to receive touch input for the processor.

The details of the present application, both as to its structure and operation, can best be understood in reference to the accompanying drawings, in which like reference numerals refer to like parts, and in which:

### BRIEF DESCRIPTION OF THE DRAWINGS

Figure 1 is an isometric view of the robot consistent with present principles, along with a control device such as a smart phone;
Figures 2 and 3 are isometric views of the robot with the display face showing different face images;
Figure 4 illustrates the mobile buggy in which the robot of Figure 1 can be disposed;
Figure 5 is a block diagram of example components of the robot;
Figures 6-8 illustrate example logic in example flow chart format consistent with present principles;
Figure 9 schematically illustrates two users remote from each other, each "conversing" with a respective local to the users which presents the facial image and mimics the motions of the opposite user;
Figure 10 schematically illustrates additional aspects from Figure 9;
Figures 11 and 12 illustrate example logic in example flow chart format consistent with present principles; and
Figures 13-15 illustrate example robot vehicles consistent with present principles.

### DETAILED DESCRIPTION

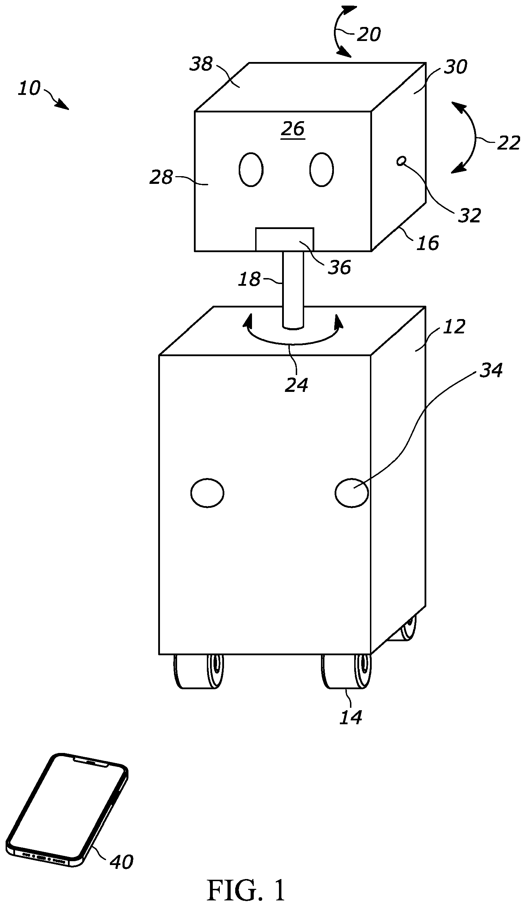

Figure 1 shows a robot 10 that includes a lower body portion 12 on propulsion elements 14, which may be established by four micro holonomic drives. The robot may be made of lightweight metal or plastic and may be relatively small, e.g., the robot 10 can be small enough to hold by hand.

An upper body or head portion 16 is movably coupled to the lower body portion 12 by one or more coupling shafts 18 that can be motor driven to move the head portion 16 relative to the lower body portion 12. The lower body 12 and head portion 16 can be parallelepiped-shaped as shown and may be cubic in some examples.

The head portion 16 can be movable relative to the lower body portion 12 both rotatably and tiltably. For example, as indicated by the arrows 20, the upper body or head portion 16 can be tiltable forward-and-back relative to the lower body portion 12, while as illustrated by the arrows 22 the upper body or head portion 16 can be tiltable left-and-right. Also, as indicated by the arrows 24, the upper body or head portion 16 can rotate about its vertical axis relative to the lower body portion 12.

The front surface 26 of the upper body or head portion 16 can be established by a display 28 configured to present demanded images. Opposed side surfaces 30 of the upper body or head portion 16 may include respective microphones 32 at locations corresponding to where the ears of a human would be. The robot 10, e.g., the lower body portion 12 thereof, can also include left and right cameras 34 which may be red-green-blue (RGB) cameras, depth cameras, or combinations thereof. The cameras alternately may be placed in the head portion 16 where the eyes of a human would be. A speaker 36 may be provided on the robot, e.g., on the head portion 16 near where the mouth of a human would be, and at least one touch sensor 38 can be mounted on the robot 10, e.g., on the top surface of the upper body or head portion 16 to receive touch input for a processor within the robot 10 and discussed further below.

A control device 40 such as a smart phone may include processors, cameras, network interfaces, and the like for controlling and communicating with the robot 10 as discussed more fully herein.

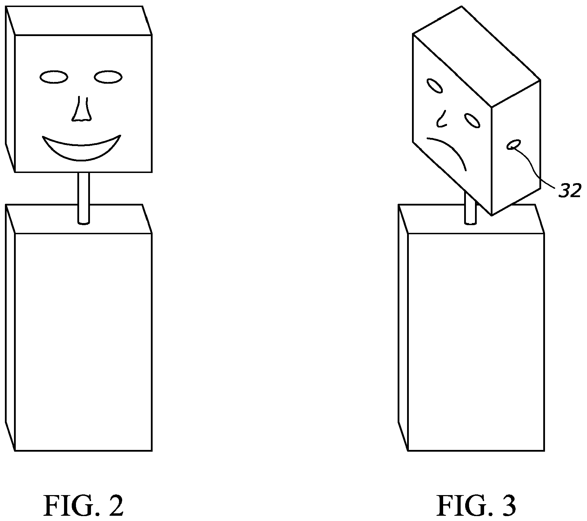

Figures 2 and 3 illustrate that the display 28 of the upper body or head portion 16 may present various different demanded images of, e.g., human faces imaged by any of the cameras herein. The images may be presented under control of any of the processors discussed herein and may be received by a network interface in the robot 10. In lieu of an image of the person, the face of an avatar representing the person may be presented to preserve privacy. The avatar may be animated to have the same emotional expressions of the person by face emotion capture (including eyes, eyebrows, mouth, and nose).

Note that whether the head portion 12 is facing straight ahead as in Figure 2 or is tilted or rotated to one side as in Figure 3, the display 28 presents the full-face image (of the person or the avatar), even if the original image is of a human taken from the side of the human's face. Details are discussed further below.

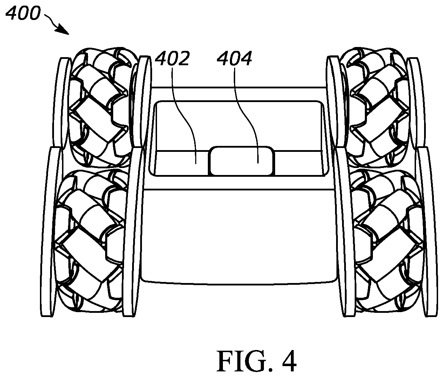

Figure 4 illustrates a motorized vehicle 400 (powered by, e.g., an internal rechargeable battery) with a recess 402 configured to closely hold the lower body portion 12 of the robot 10 to transport the robot 10. At least one magnet 404 can be disposed in the recess 402 to magnetically and electrically couple the robot 10 (which can include a magnet or ferromagnet) with the motorized vehicle 400 and to charge at least one battery in the robot. Advantageously, the propulsion elements 14 of the robot 10 need not be detached to secure the robot 10 in the recess 402. The processor of the robot 10 senses the presence of a processor in the vehicle 400 and controls the processor in the vehicle 400 to move the vehicle 400 in lieu of moving the robot 10 by means of the propulsion element 14.

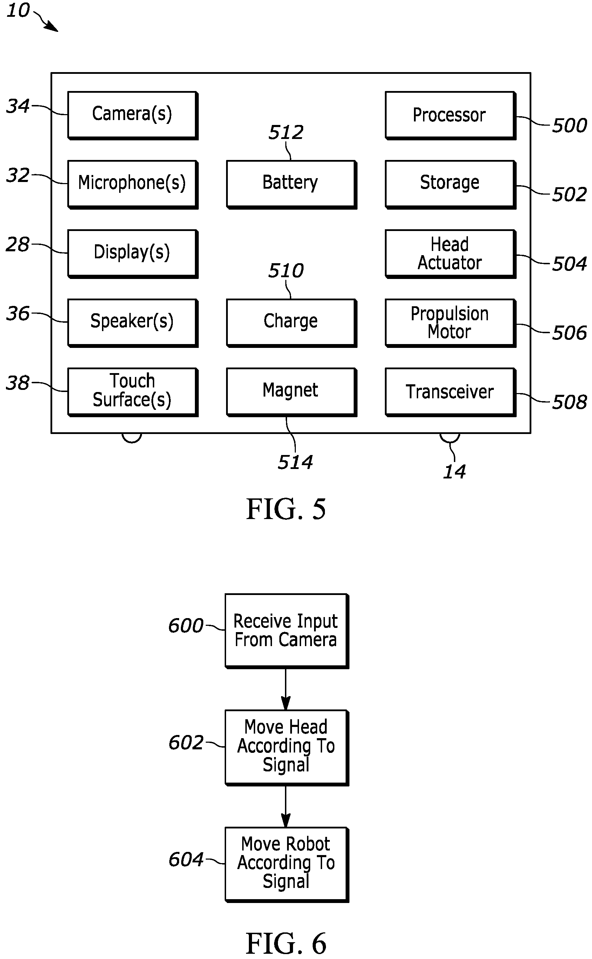

Figure 5 illustrates various components of the robot 10 many of which are internal to the robot 10. In addition to the camera(s) 34, microphone(s) 32, display(s) 28, speaker(s) 36, and touch surface(s) 38, the robot 10 may include one or more processors 500 accessing one or more computer storages 502 to program the processor 500 with instructions executable to undertake logic discussed herein. The processor 500 may control the components illustrated in Figure 5, including a head actuator 504 to move the head portion 16 relative to the body portion 12, a propulsion motor 506 to activate the propulsion elements 14 shown in Figure 1, and a network interface 508 such as a wireless transceiver to communicate data to components external to the robot 10.

A charge circuit 510 may be provided to charge one or more batteries 512 to provide power to the components of the robot. As discussed above, the charge circuit 510 may receive charge current via one or more magnetic elements 514 from, e.g., the vehicle 400 shown in Figure 4.

Figures 6-8 illustrate example logic in example flow chart format that the processor 500 in Figure 5 may execute. Commencing at bock 600 in Figure 6, input may be received from the camera(s) 34. Face recognition may be executed on images from the camera, for example, to move the head 16 at block 602 to remain facing a person imaged by the camera. Also, at block 604 the robot may be activated to move on the propulsion elements 14 according to the camera signal, e.g., to turn and "hide" behind a nearby object as if "shy" in the presence of the person being imaged by the camera.

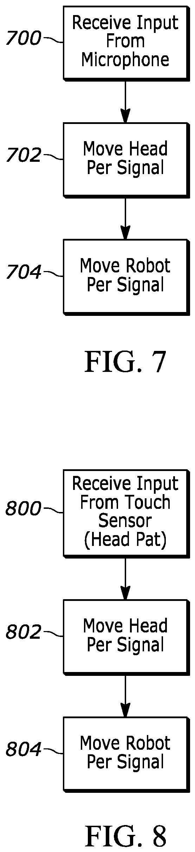

Commencing at bock 700 in Figure 7, input may be received from the microphone(s) 32. Voice recognition may be executed on the signals, for example, to move the head 16 at block 702 to cock one of the side of the head of the robot toward the source of the signals (or toward the face of a person imaged by the cameras) as if listening attentively to the person. Also, at block 704 the robot may be activated to move on the propulsion elements 14 according to the microphone signal, e.g., to turn and approach a person being imaged by the camera.

Commencing at bock 800 in Figure 8, input may be received from the touch surface(s) 38. At block 802 the processor may actuate the head 16 to move in response to the touch signal, e.g., to bow the head as if in respect to the person touching the head. Also, at block 804 the robot may be activated to move on the propulsion elements 14 according to the touch signal.

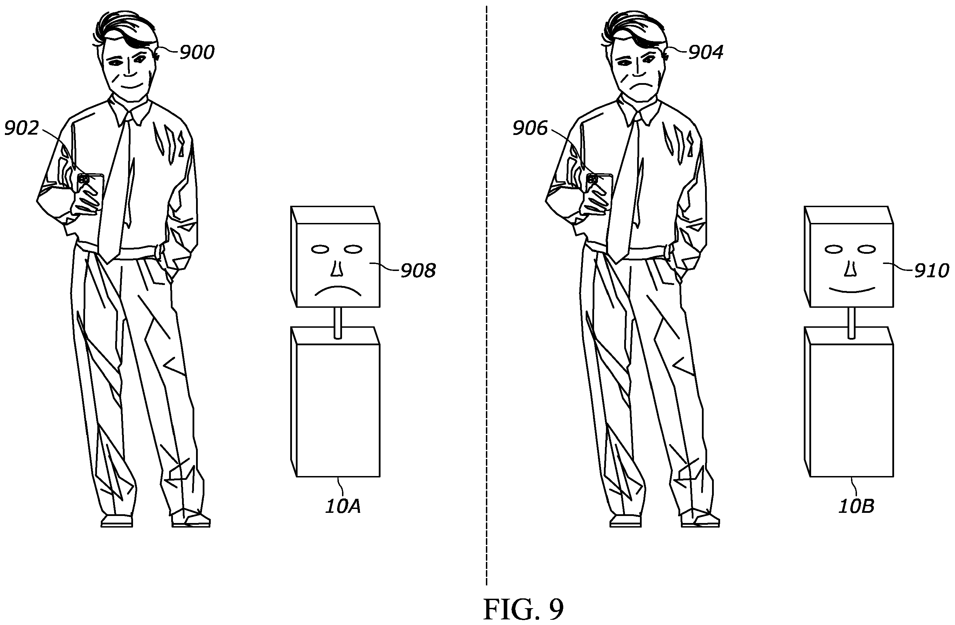

Figure 9 illustrates a use case of the robot 10. A first user 900 may operate a smart phone or tablet computer or other control device 902 to communicate with a first robot 10A. Remote from the first user 900, a second user 904 may operate a smart phone or tablet computer or other control device 904 to communicate with a second robot 10B.

As indicated in Figure 9, the first robot 10A presents on its display 28 a full-face image 908 of the (frowning) second user 904 (equivalently, a frowning avatar face). The second robot 10B presents on its display 28 a full-face image 910 of the (smiling) first user 900 (equivalently, a smiling avatar face). The image 908 on the display of the first robot 10A may represent the second user 904 based on images generated by a camera in the second user control device 908 or a camera in the second robot 10B and communicated over, e.g., a wide area computer network or a telephony network to the first robot 10A. Likewise, the image 910 on the display of the second robot 10B may represent the first user 900 based on images generated by a camera in the first user control device 902 or the first robot 10A and communicated over, e.g., a wide area computer network or a telephony network to the second robot 10B. The face images of the users/avatars may be 2D or 3D and the displays 28 of the robots may be 2D displays or 3D displays.

Moreover, the head of the first robot 10A may be controlled by the processor in the first control device 902 and/or the first robot 10A to rotate and tilt in synchronization with the head of the second user 904 as indicated by images from the second control device 906 and/or second robot 10B. Likewise, the head of the second robot 10B may be controlled by the processor in the second control device 906 and/or the second robot 10B to rotate and tilt in synchronization with the head of the first user 900 as indicated by images from the first control device 902 and/or first robot 10A.

In both cases, however, the image of the faces on the robots remain full-face images as would be seen from a direction normal (perpendicular) to the display 28 from in front of the display, regardless of the orientation of the head of the respective robot. The full-face images are cropped from any background in the images of the respective user and are also cropped from body parts of the respective below the chin that may appear in the images. The full face images may be generated even as the head of the respective user turns away from the imaging camera consistent with disclosure herein, so that the front display surface of the robots present not profile images as generated by the cameras but full face images derived as described herein from camera images of a turned head no matter how the robot head is turned or tilted, just as a human face of a turned head remains a full face when viewed from directly in front of the face from a line of sight perpendicular to the face.

As below-the-head images of a user indicate movement (such as but not limited to translational movement) of the user, the corresponding (remote) robot may also move in the direction indicated by the images by activating the propulsion motor and, hence, propulsion elements 14 of the robot. In particular, the body portion of the robot below the display may move. Further, speech from the first user 900 as detected by the first control device 902 or first robot 10A may be sent to the second robots 10B for play on the speaker on the second robot, and vice-versa.

Thus, the first user 900 may interact with the first robot 10A presenting the face image of the second (remote) user 904 as if the second user 904 were located at the position of the first robot 10A, i.e., local to the first user 900. Likewise, the second user 904 may interact with the second robot 10B presenting the face image of the first (remote) user 900 as if the first user 900 were located at the position of the second robot 10B, i.e., local to the second user 904.

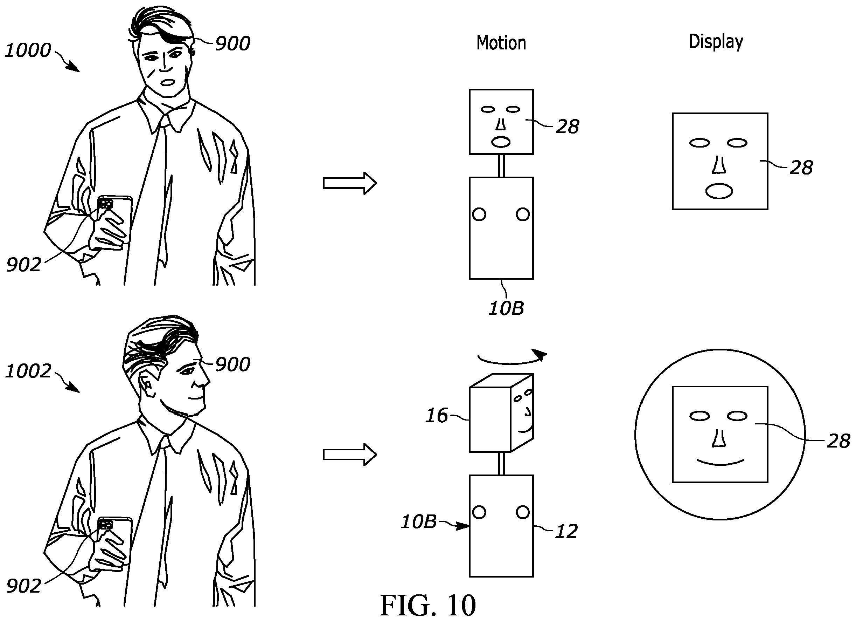

Figure 10 further illustrates the above principles, assuming that user images are employed, it being understood that the same principles apply when avatars expressing the user emotion are used. At 1000 the first user 900 of Figure 9 operating the first control device 902 is imaged using any of the cameras discussed previously to move the second robot 10B and to send an image of the face of the first user 900 to the display 28 of the second robot 10B for presentation of a full-face image (and only a full-face image) on the second robot 10B. The image may be sent to a network address of the second robot 10B or sent to the second control device 906 shown in Figure 9, which relays the image to the second robot 10B via, e.g., Wi-Fi or Bluetooth. No background apart from the face image and no body portions of the first user 900 other than the face are presented on the display 28 of the second robot 10B.

As shown at 1002, should the first user 900 turn his head to the left, this motion is captured, e.g., by the camera(s) in the first control device 902 and/or first robot 10A and signals such as a stream of images are sent to the second robot 10B as described above to cause the processor 500 of the second robot 10B to activate the head actuator 504 to turn the head 16 of the second robot 10B to the left relative to the body 12 of the second robot 10B, as illustrated in Figure 10. However, the display 28 of the second robot 10B, although turned to the left relative to the front of the body 12, does not show a profile view of the head of the first user 900 as currently being imaged by the camera(s) of the first control device 902 or first robot 10A. Instead, as shown in Figure 10 the display 28 of the second robot 10B continues to show a full-face image, i.e., an image of the face of the first user 900 as would be seen if looking directly at the face from a line of sight perpendicular to the face.

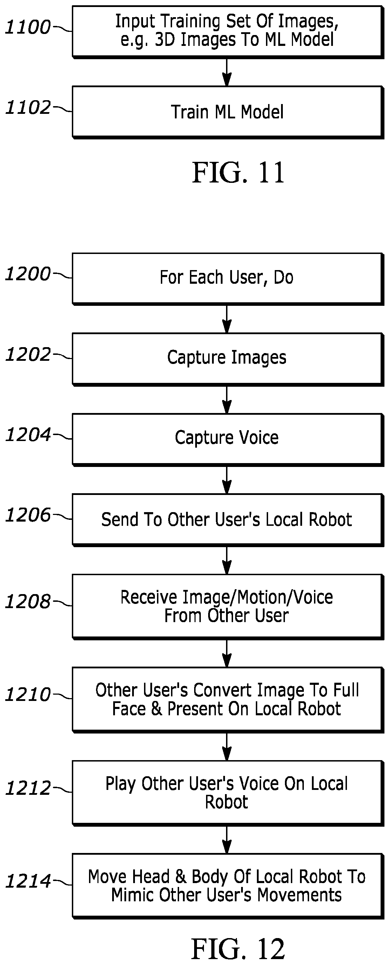

Figure 11 illustrates further principles that may be used in connection with the above description. Commencing at block 1100, an input set of training images is input to a machine learning (ML) model, such as one or more of a convolutional neural network (CNN), recurrent NN (RNN), and combinations thereof. The ML model is trained using the training set at block 1102.

The training set of images may include 3D images of human faces from various perspectives, from full frontal view through full side profile views. The training set of images may include ground truth 2D full frontal view representations of each 3D perspective view including non-full frontal 3D perspective views. The ground truth 2D images are face-only, configured to fill an entire display 28 of a robot 10, with background and body portions other than the face cropped out from the corresponding 3D images. The full-frontal view representations show facial features as well as emotional distortions of facial muscles (smiling, frowning, etc.). In this way, the ML model learns how to generate full frontal view 2D images from a series of 3D images of a user's face as the user turns his head toward and away from a camera rendering the 3D images.

Accordingly, present principles may employ machine learning models, including deep learning models. Machine learning models use various algorithms trained in ways that include supervised learning, unsupervised learning, semi-supervised learning, reinforcement learning, feature learning, self-learning, and other forms of learning. Examples of such algorithms, which can be implemented by computer circuitry, include one or more neural networks, such as a convolutional neural network (CNN), recurrent neural network (RNN) which may be appropriate to learn information from a series of images, and a type of RNN known as a long short-term memory (LSTM) network. Support vector machines (SVM) and Bayesian networks also may be considered to be examples of machine learning models.

As understood herein, performing machine learning involves accessing and then training a model on training data to enable the model to process further data to make predictions. A neural network may include an input layer, an output layer, and multiple hidden layers in between that that are configured and weighted to make inferences about an appropriate output.

Figure 12 illustrates logic attendant to Figures 9 and 10 using a ML model as trained in Figure 11. It is to be understood that the logic of Figure 12 may be executed by any of the processors or combinations thereof described herein, including the processor of a server on a wide area computer network communicating with the control devices 902, 906 and/or robots 10A, 10B.

Commencing at block 1200, for each user (assume only two users 900, 904 as shown in Figure 9 for simplicity) images are captured at bock 1202 of the user's face, including images showing motion of the face and body of the user. The voice of the user is captured at block 1204 and both the voice signals and image sequence of the user as the user moves and speaks are sent at block 1206 to the other user's local robot.

Meanwhile and proceeding to block 1208, the same signals - image sequences of the face and body motions and voice signals of the other user - are received at block 1208. The image of the face of the other user, if not already full face as would be seen looking directly at the other user along a line of sight perpendicular to the front of the face of the other user, is converted at block 1210 to a 2D full face image using the ML model trained as described, with background and body parts of the other user other than the face being cropped. The full face 2D image is presented on the display 28 of the local robot preferably by entirely filling the display with the image of the face of the other user. As mentioned above, conversion of a 3D image in profile of a user's face to a full face 2D image may be effected by any one or more of the processors described herein.

In an alternative embodiment, in lieu of using ML models to convert 3D images to full face 2D images, a single 2D full face image of the other user may be obtained and presented for the duration on the local robot. As also discussed, avatars may be used for privacy instead of the image of a person, with the expression of the avatars preferably being animated according to the expression of the person.

If desired, the other user's voice may be played at block 1212 on the local robot or the local control device. Also, at block 1214 the head of the local robot may be turned to mimic head motion of the other user as represented by the sequence of images received at block 1208 and as shown at 1002 in Figure 10. Moreover, in the event that the other user moves his body by, e.g., walking, that motion is captured and received at block 1208 and input to the processor of the local robot to actuate the propulsion elements 14 (or, if the robot is in a vehicle such as the vehicle 400 shown in Figure 4, the vehicle) to translationally move the local robot to mimic the motion of the other user.

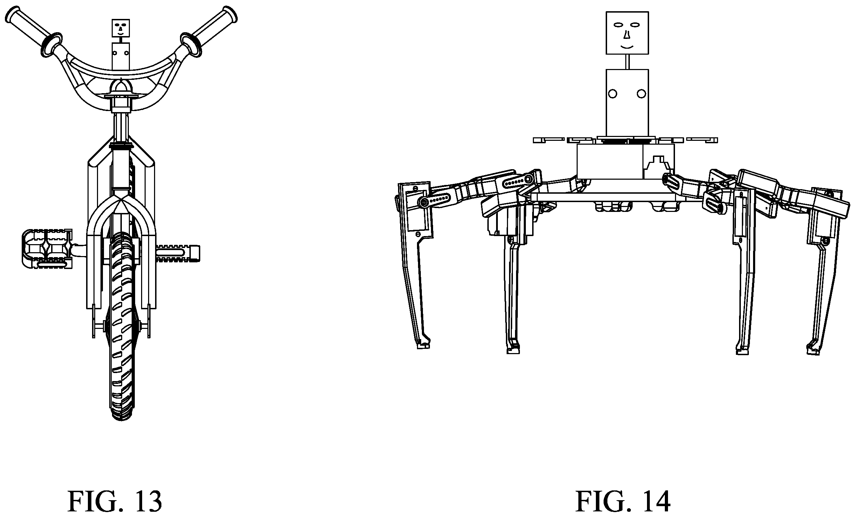

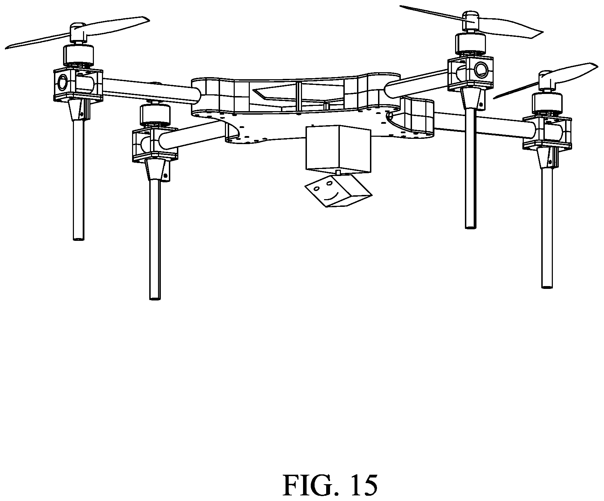

Figures 13-15 indicate that in lieu of the motorized vehicle 400 shown in Figure 4, the robot 10 may be mounted on other types of moving platforms such as a bicycle 1300, a crab-like tractor 1400, or an airborne drone 1500.

A processor may be a single- or multi-chip processor that can execute logic by means of various lines such as address lines, data lines, and control lines and registers and shift registers.

Network interfaces such as transceivers may be configured for communication over at least one network such as the Internet, a WAN, a LAN, etc. An interface may be, without limitation, a Wi-Fi transceiver, Bluetooth^{®} transceiver, near filed communication transceiver, wireless telephony transceiver, etc.

Computer storage may be embodied by computer memories such as disk-based or solid-state storage that are not transitory signals.

While the particular robot is herein shown and described in detail, it is to be understood that the subject matter which is encompassed by the present invention is limited only by the claims.

## Claims

1. A device comprising:
at least one computer storage (502) that is not a transitory signal and that comprises instructions executable by at least one processor (500) to:
for at least a first user (900), render, from at least one image captured of the first user (900) by at least one imager (34), a full-face image representing the first user (900) with background and body parts of the first user cropped out of the image representing the first user, the full-face image (910) being a front view of the first user's face from a line of sight perpendicular to the face;
provide, to at least a first robot (10A) remote from the first user (900), the full-face image (910) for presentation thereof on a display of the first robot (10A) with the full-face image (910) filling the display (28);
provide, to the first robot (10A), information from the imager regarding motion of the first use (900) such that a head (16) of the first robot (10A) turns to mimic the motion of the first user (900) while continuing to present the full-face image (910) on the display of the first robot (10A) regardless of whether the head of the first user (900) turned away from the imager.

2. The device of Claim 1, comprising the at least one processor (500) embodied in the first robot (10A).

3. The device of Claim 1, wherein the instructions are executable to:
provide to the first robot (10A) voice signals from the first user (900) to enable the first robot (10A) to play the voice signals on at least one speaker (36) of the first robot (10A).

4. The device of Claim 1, wherein the first robot (10A) comprises a body portion (12) movably engaged with the display (28), and the instructions are executable to:
provide to the first robot (10A) signals from the imager (34) representing below-the-head movement of the first user (900) to cause the body portion (12) of the first robot (10A) to move according to the below-the-head movement of the first user (900).

5. The device of Claim 1, wherein the instructions are executable to:
for at least a second user (904) who is local to the first robot (10A), render, from at least one image captured of the second user (904) by at least one imaging device (34), a full-face image (908) representing the second user (904) with background and body parts of the second user (904) cropped out of the image representing the second user (904);
provide, to at least a second robot (10B) remote from the second user (904) and local to the first user (900), the full-face image (908) representing second user (904) for presentation thereof on a display (28) of the second robot (10B) with the full-face image (908) representing the second user (904) filling the display (28) of the second robot (10B);
provide, to the second robot (10B), information from the imaging device (34) regarding motion of the second user (904) such that a head (16) of the second robot (10B) turns to mimic the motion of the second user (904) while continuing to present a full-face image (908) representing the second user (904) on the display (28) of the second robot (10B) regardless of whether the head of the second user (904) turned away from the imaging device (34).

6. A method, comprising:
for at least a first user (900), rendering, from at least one image captured of the first user (900), a full-face image (910) representing the first user (900) with background and body parts of the first user (900) cropped out of the full-face image (910), the full-face image (910) being a front view of the first user's face from a line of sight perpendicular to the face;
presenting, on at least one display (28) of a first robot (10A) remote from the first user (900), the full-face image (910) representing the first user (900) with the full-face image (910) filling the display (28) of the first robot (10A);
turning a head (16) of the first robot (10A) to mimic a head turn of the first user (900) while continuing to present a full-face image (910) representing the first user (900) on the display (28) of the first robot (10A);
for at least a second user (904) local to the first robot (10A), rendering, from at least one image captured of the second user (904), a full-face image (908) representing the second user (904) with background and body parts of the second user (904) cropped out of the image representing the second user (904);
presenting, on at least one display (28) of a second robot (10B) local to the first user (900), the full-face image (908) representing the second user (904) with the full-face image (908) representing the second user (904) filling the display (28) of the second robot (10B), and
turning a head (16) of the second robot (10B) to mimic a head turn of the second user (904) while continuing to present a full-face image (908) representing the second user (904) on the display (28) ) of the second robot (10B).

7. The method of Claim 6, comprising:
presenting audio generated by the first user (900) on the second robot (10B); and
presenting audio generated by the second user (904) on the first robot (10A).

8. A robot (10) comprising and controlled by the device of claim 1, the robot (10) further comprising:
a lower body portion (12) on propulsion elements (14);
an upper body portion (16) coupled to the lower body portion (12) and movable relative to the lower body portion (12), the upper body portion (16) comprising:
at least one display (28) configured to present an image representing a person remote from the robot (10), the image being a full-face image, and the full-face image being a front view of the person's face from a line of sight perpendicular to the face.

9. The robot (10) of Claim 8, wherein the upper body portion (16) is movable relative to the lower body portion (12) in accordance with motion of the person as indicated by signals received from an imager (34) imaging the person.

10. The robot (10) of Claim 8, wherein the full-face image is generated from a profile image of the person.

11. The robot (10) of Claim 8, wherein the full-face image is generated from a profile image of the person using a machine learning (ML) model.

12. The robot (10) of Claim 8, wherein the robot (10) comprises at least one camera (34) and comprises at least one processor (500) to send images from the camera (34) to a companion robot local to and associated with the person.

13. The robot (10) of Claim 8, comprising a motorized vehicle (400) with a recess (402) configured to closely hold the lower body portion (12) to transport the robot (10), at least one magnel (404) being disposed in the recess (402) to magnetically couple the robot (10) with the motorized vehicle (400) and to charge at least one battery in the robot.

14. The robot (10) of Claim 8, comprising at least one touch sensor (38) on a top surface of the upper body portion (16) to receive touch input for the processor (500).

15. The robot (10) of Claim 8, wherein the propulsion elements (14) comprise micro holonomic drives.

## Patentansprüche

1. Vorrichtung, umfassend:
mindestens einen Computerspeicher (502), der kein transitorisches Signal ist und der Anweisungen umfasst, die von mindestens einem Prozessor (500) ausgeführt werden können zum:
für mindestens einen ersten Benutzer (900) aus mindestens einem Bild, das von mindestens einem Bildgeber (34) von dem ersten Benutzer (900) aufgenommen wurde, Rendern eines Vollgesichtsbildes, das den ersten Benutzer (900) darstellt, wobei Hintergrund und Körperteile des ersten Benutzers aus dem Bild, das den ersten Benutzer darstellt, herausgeschnitten werden, wobei das Vollgesichtsbild (910) eine Vorderansicht des Gesichts des ersten Benutzers aus einer Sichtlinie senkrecht zum Gesicht ist;
Bereitstellen des Vollgesichtsbildes (910) für mindestens einen ersten Roboter (10A), der von dem ersten Benutzer (900) entfernt ist, um es auf einer Anzeige des ersten Roboters (10A) darzustellen, wobei das Vollgesichtsbild (910) die Anzeige (28) ausfüllt;
Bereitstellen von Informationen vom Bildgeber bezüglich der Bewegung des ersten Benutzers (900) für den ersten Roboter (10A), sodass ein Kopf (16) des ersten Roboters (10A) sich dreht, um die Bewegung des ersten Benutzers (900) zu imitieren, während er weiterhin das Vollgesichtsbild (910) auf der Anzeige des ersten Roboters (10A) präsentiert, unabhängig davon, ob der Kopf des ersten Benutzers (900) sich von dem Bildgeber abgewandt hat.

2. Vorrichtung nach Anspruch 1, umfassend den mindestens einen Prozessor (500), der in dem ersten Roboter (10A) eingebaut ist.

3. Vorrichtung nach Anspruch 1, wobei die Anweisungen ausgeführt werden können zum:
Bereitstellen von Sprachsignalen des ersten Benutzers (900) an den ersten Roboter (10A), damit der erste Roboter (10A) die Sprachsignale auf mindestens einem Lautsprecher (36) des ersten Roboters (10A) abspielen kann.

4. Vorrichtung nach Anspruch 1, wobei der erste Roboter (10A) einen Körperabschnitt (12) umfasst, der beweglich mit der Anzeige (28) in Eingriff steht, und Anweisungen ausgeführt werden können zum:
Bereitstellen von Signalen vom Bildgeber (34), die die Bewegung des ersten Benutzers (900) unter dem Kopf darstellen, an den ersten Roboter (10A), um den Körperabschnitt (12) des ersten Roboters (10A) zu veranlassen, sich nach der Bewegung des ersten Benutzers (900) unter dem Kopf zu bewegen.

5. Vorrichtung nach Anspruch 1, wobei die Anweisungen ausgeführt werden können zum:
Rendern für mindestens einen zweiten Benutzer (904), der sich in der Nähe des ersten Roboters (10A) befindet, aus mindestens einem Bild, das von mindestens einer Bildgebungsvorrichtung (34) von dem zweiten Benutzer (904) aufgenommen wurde, ein Vollgesichtsbild (908), das den Hintergrund des zweiten Benutzers (904) darstellt, und Körperteile des zweiten Benutzers (904), die aus dem Bild, das den zweiten Benutzer (904) darstellt, ausgeschnitten sind;
Bereitstellen des Vollgesichtsbildes (908), das den zweiten Benutzer (904) darstellt, für mindestens einen zweiten Roboter (10B), der von dem zweiten Benutzer (904) entfernt ist und lokal zu dem ersten Benutzer (900) ist, um es auf einer Anzeige (28) des zweiten Roboters (10B) darzustellen, wobei das Vollgesichtsbild (908), das den zweiten Benutzer (904) darstellt, die Anzeige (28) des zweiten Roboters (10B) ausfüllt;
Bereitstellen von Informationen von der Bildgebungsvorrichtung (34) bezüglich der Bewegung des zweiten Benutzers (904) für den zweiten Roboter (10B), sodass ein Kopf (16) des zweiten Roboters (10B) sich dreht, um die Bewegung des zweiten Benutzers (904) nachzuahmen, während er weiterhin ein Vollgesichtsbild (908), das den zweiten Benutzer (904) darstellt, auf der Anzeige (28) des zweiten Roboters (10B) darstellt, unabhängig davon, ob der Kopf des zweiten Benutzers (904) sich von der Bildgebungsvorrichtung (34) abwendet.

6. Verfahren, umfassend:
für mindestens einen ersten Benutzer (900), Rendern eines Vollgesichtsbildes (910), das den ersten Benutzer (900) darstellt, wobei der Hintergrund und die Körperteile des ersten Benutzers (900) aus dem Vollgesichtsbild (910) herausgeschnitten sind, wobei das Vollgesichtsbild (910) eine Vorderansicht des Gesichts des ersten Benutzers aus einer Sichtlinie senkrecht zum Gesicht ist, aus mindestens einem vom ersten Benutzer (900) aufgenommenen Bild;
Darstellen des Vollgesichtsbildes (910), das den ersten Benutzer (900) darstellt, auf mindestens einer Anzeige (28) eines ersten Roboters (10A), der von dem ersten Benutzer (900) entfernt ist, wobei das Vollgesichtsbild (910) die Anzeige (28) des ersten Roboters (10A) ausfüllt;
Drehen eines Kopfes (16) des ersten Roboters (10A), um eine Kopfdrehung des ersten Benutzers (900) zu imitieren, während weiterhin ein Vollgesichtsbild (910), das den ersten Benutzer (900) darstellt, auf der Anzeige (28) des ersten Roboters (10A) angezeigt wird;
Rendern eines Vollgesichtsbildes (908), das den zweiten Benutzer (904) darstellt, wobei der Hintergrund und die Körperteile des zweiten Benutzers (904) aus dem Bild, das den zweiten Benutzer (904) darstellt, herausgeschnitten werden, für mindestens einen zweiten Benutzer (904), der sich in der Nähe des ersten Roboters (10A) befindet, aus mindestens einem vom zweiten Benutzer (904) aufgenommenen Bild;
Darstellen des Vollgesichtsbildes (908), das den zweiten Benutzer (904) darstellt, auf mindestens einer Anzeige (28) eines zweiten Roboters (10B), der sich in der Nähe des ersten Benutzers (900) befindet, wobei das Vollgesichtsbild (908), das den zweiten Benutzer (904) darstellt, die Anzeige (28) des zweiten Roboters (10B) ausfüllt; und
Drehen eines Kopfes (16) des zweiten Roboters (10B), um eine Kopfdrehung des zweiten Benutzers (904) nachzuahmen, während weiterhin ein Vollgesichtsbild (908), das den zweiten Benutzer (904) darstellt, auf der Anzeige (28) des zweiten Roboters (10B) angezeigt wird.

7. Verfahren nach Anspruch 6, umfassend:
Darstellen von Audio, das vom ersten Benutzer (900) erzeugt wurde, auf dem zweiten Roboter (10B); und
Darstellen von Audio, das vom zweiten Benutzer (904) erzeugt wurde, auf dem ersten Roboter (10A).

8. Roboter (10), umfassend und gesteuert durch die Vorrichtung nach Anspruch 1, der Roboter (10) ferner umfassend:
einen unteren Körperabschnitt (12) auf Antriebselementen (14);
einen oberen Körperabschnitt (16), der mit dem unteren Körperabschnitt (12) gekoppelt und relativ zum unteren Körperabschnitt (12) bewegt werden kann, der obere Körperabschnitt (16) umfassend:
mindestens eine Anzeige (28), die so konfiguriert ist, dass sie ein Bild darstellt, das eine vom Roboter (10) entfernte Person zeigt,
das Bild ein Vollgesichtsbild ist, und das Vollgesichtsbild eine Vorderansicht des Gesichts der Person aus einer Sichtlinie senkrecht zum Gesicht ist.

9. Roboter (10) nach Anspruch 8, wobei der obere Körperabschnitt (16) relativ zum unteren Körperabschnitt (12) nach der Bewegung der Person bewegt werden kann, wie sie durch Signale angezeigt wird, die von einem Bildgeber (34) empfangen werden, der die Person abbildet.

10. Roboter (10) nach Anspruch 8, wobei das Vollgesichtsbild aus einem Profilbild der Person erzeugt wird.

11. Roboter (10) nach Anspruch 8, wobei das Vollgesichtsbild aus einem Profilbild der Person unter Verwendung eines maschinellen Lernmodells (ML) erzeugt wird.

12. Roboter (10) nach Anspruch 8, wobei der Roboter (10) mindestens eine Kamera (34) umfasst und mindestens einen Prozessor (500) umfasst, um Bilder von der Kamera (34) an einen Begleitroboter zu senden, der sich in der Nähe der Person befindet und mit ihr verbunden ist.

13. Roboter (10) nach Anspruch 8, umfassend ein motorisiertes Fahrzeug (400) mit einer Vertiefung (402), die so konfiguriert ist, dass sie den unteren Körperabschnitt (12) eng hält, um den Roboter (10) zu transportieren, wobei mindestens ein Magnet (404) in der Vertiefung (402) angeordnet ist, um den Roboter (10) magnetisch mit dem motorisierten Fahrzeug (400) zu koppeln und mindestens eine Batterie in dem Roboter zu laden.

14. Roboter (10) nach Anspruch 8, umfassend mindestens einen Berührungssensor (38) auf einer oberen Oberfläche des oberen Körperabschnitts (16), um eine Berührungseingabe für den Prozessor (500) zu empfangen.

15. Roboter (10) nach Anspruch 8, wobei die Antriebselemente (14) mikroholonomische Antriebe umfassen.

## Revendications

1. Dispositif comprenant :
au moins un stockage informatique (502) qui n'est pas un signal transitoire et qui comprend des instructions exécutables par au moins un processeur (500) pour :
pour au moins un premier utilisateur (900), restituer, à partir d'au moins une image capturée du premier utilisateur (900) par au moins un dispositif d'imagerie (34), une image d'un visage entier représentant le premier utilisateur (900) avec un arrière-plan et des parties de corps du premier utilisateur rognés de l'image représentant le premier utilisateur, l'image de visage entier (910) étant une vue de face du visage du premier utilisateur à partir d'une ligne de visée perpendiculaire au visage ;
fournir, à au moins un premier robot (10A) éloigné du premier utilisateur (900), l'image de visage entier (910) pour la présenter sur un écran du premier robot (10A), l'image de visage entier (910) remplissant l'écran (28) ;
fournir au premier robot (10A) des informations provenant du dispositif d'imagerie concernant un mouvement du premier utilisateur (900) de sorte qu'une tête (16) du premier robot (10A) se tourne pour imiter le mouvement du premier utilisateur (900) tout en continuant à présenter l'image du visage entier (910) sur l'écran du premier robot (10A), que la tête du premier utilisateur (900) se soit ou non détournée du dispositif d'imagerie.

2. Dispositif selon la revendication 1, comprenant l'au moins un processeur (500) incorporé dans le premier robot (10A).

3. Dispositif selon la revendication 1, dans lequel les instructions sont exécutables pour :
fournir au premier robot (10A) des signaux vocaux provenant du premier utilisateur (900) pour permettre au premier robot (10A) de diffuser les signaux vocaux sur au moins un haut-parleur (36) du premier robot (10A).

4. Dispositif selon la revendication 1, dans lequel le premier robot (10A) comprend une partie de corps (12) en prise de manière mobile avec l'écran (28), et des instructions sont exécutables pour :
fournir au premier robot (10A) des signaux provenant du dispositif d'imagerie (34) représentant un mouvement au-dessous la tête du premier utilisateur (900) afin d'amener la partie du corps (12) du premier robot (10A) à se déplacer en fonction du mouvement au-dessous la tête du premier utilisateur (900).

5. Dispositif selon la revendication 1, dans lequel les instructions sont exécutables pour :
pour au moins un second utilisateur (904) qui est local au premier robot (10A), restituer, à partir d'au moins une image capturée du second utilisateur (904) par au moins un dispositif d'imagerie (34), une image du visage entier (908) représentant le second utilisateur (904), un arrière-plan et des parties de corps du second utilisateur (904) étant rognés de l'image représentant le second utilisateur (904) ;
fournir, à au moins un second robot (10B) éloigné du second utilisateur (904) et local au premier utilisateur (900), l'image du visage entier (908) représentant le second utilisateur (904) pour la présenter sur un écran (28) du second robot (10B) avec l'image du visage entier (908) représentant le second utilisateur (904) remplissant l'écran (28) du second robot (10B) ;
fournir au second robot (10B) des informations provenant du dispositif d'imagerie (34) concernant un mouvement du second utilisateur (904) de sorte qu'une tête (16) du second robot (10B) tourne pour imiter le mouvement du second utilisateur (904) tout en continuant à présenter une image du visage entier (908) représentant le second utilisateur (904) sur l'écran (28) du second robot (10B), que la tête du second utilisateur (904) se soit ou non détournée du dispositif d'imagerie (34).

6. Procédé, comprenant :
pour au moins un premier utilisateur (900), la restitution, à partir d'au moins une image capturée du premier utilisateur (900), une image de visage entier (910) représentant le premier utilisateur (900) avec un arrière-plan et des parties de corps du premier utilisateur (900) rognés de l'image du visage entier (910), l'image du visage entier (910) étant une vue de face du visage du premier utilisateur à partir d'une ligne de visée perpendiculaire au visage ;
la présentation, sur au moins un écran (28) d'un premier robot (10A) éloigné du premier utilisateur (900), de l'image de visage entier (910) représentant le premier utilisateur (900), l'image de visage entier (910) remplissant l'écran (28) du premier robot (10A) ;
la rotation d'une tête (16) du premier robot (10A) pour imiter une rotation de la tête du premier utilisateur (900) tout en continuant à présenter une image du visage entier (910) représentant le premier utilisateur (900) sur l'écran (28) du premier robot (10A) ;
pour au moins un second utilisateur (904) local du premier robot (10A), la restitution, à partir d'au moins une image capturée du second utilisateur (904), d'une image de visage entier (908) représentant le second utilisateur (904) avec un arrière-plan et des parties du corps du second utilisateur (904) rognés de l'image représentant le second utilisateur (904) ;
la présentation, sur au moins un écran (28) d'un second robot (10B) local du premier utilisateur (900), de l'image de visage entier (908) représentant le second utilisateur (904), l'image de visage entier (908) représentant le second utilisateur (904) remplissant l'écran (28) du second robot (10B) ; et
la rotation d'une tête (16) du second robot (10B) pour imiter une rotation de tête du second utilisateur (904) tout en continuant à présenter une image de visage entier (908) représentant le second utilisateur (904) sur l'écran (28) du second robot (10B).

7. Procédé selon la revendication 6, comprenant :
la présentation d'un audio généré par le premier utilisateur (900) sur le second robot (10B) ; et
la présentation d'un audio généré par le second utilisateur (904) sur le premier robot (10A).

8. Robot (10) comprenant et commandé par le dispositif selon la revendication 1, le robot (10) comprenant en outre :
une partie de corps inférieure (12) sur des éléments de propulsion (14) ;
une partie de corps supérieure (16) accouplée à la partie de corps inférieure (12) et mobile par rapport à la partie de corps inférieure (12), la partie de corps supérieure (16) comprenant :
au moins un écran (28) configuré pour présenter une image représentant une personne éloignée du robot (10),
l'image étant une image de visage entier, et l'image de visage entier étant une vue de face du visage de la personne à partir d'une ligne de visée perpendiculaire au visage.

9. Robot (10) selon la revendication 8, dans lequel la partie de corps supérieure (16) est mobile par rapport à la partie de corps inférieure (12) en fonction d'un mouvement de la personne tel qu'indiqué par des signaux reçus d'un dispositif d'imagerie (34) traitant une image de la personne.

10. Robot (10) selon la revendication 8, dans lequel l'image de visage entier est générée à partir d'une image de profil de la personne.

11. Robot (10) selon la revendication 8, dans lequel l'image de visage entier est générée à partir d'une image de profil de la personne à l'aide d'un modèle d'apprentissage automatique (ML).

12. Robot (10) selon la revendication 8, dans lequel le robot (10) comprend au moins une caméra (34) et comprend au moins un processeur (500) pour envoyer des images provenant de la caméra (34) à un robot compagnon local et associé à la personne.

13. Robot (10) selon la revendication 8, comprenant un véhicule motorisé (400) avec un évidement (402) conçu pour tenir étroitement la partie de corps inférieure (12) pour transporter le robot (10), au moins un aimant (404) étant disposé dans l'évidement (402) pour accoupler magnétiquement le robot (10) avec le véhicule motorisé (400) et pour charger au moins une batterie dans le robot.

14. Robot (10) selon la revendication 8, comprenant au moins un capteur tactile (38) sur une surface supérieure de la partie de corps supérieure (16) pour recevoir une entrée tactile pour le processeur (500).

15. Robot (10) selon la revendication 8, dans lequel les éléments de propulsion (14) comprennent des entraînements micro-holonomes.
